# EUROPEAN PATENT SPECIFICATION

(11) **EP 0 765 202 B1**
(45) Date of publication and mention of the grant of the patent: **16.02.2000**
(21) Application number: 95922819.8
(22) Date of filing: 31.05.1995
(51) Int. Cl.: B23B 51/00, B23B 41/02, B23P 15/28

(54) **DRILLING TOOL WITH INTERNAL CAVITIES FOR CHIP REMOVAL**
BOHRWERKZEUG MIT SPANABFUHRNUTEN
OUTIL DE PER AGE A CAVITES INTERNES PERMETTANT L'EVACUATION DES COPEAUX

(30) Priority: 13.06.1994 SE 9402037
(43) Date of publication of application: 02.04.1997
(73) Proprietor: SANDVIK AKTIEBOLAG, 811 81 Sandviken (SE)
(72) Inventor: BLOMBERG, Torsten, S-811 36 Sandviken (SE); SANDBERG, Lars, S-753 26 Uppsala (SE)
(86) International application number: PCT/SE95/00616
(87) International publication number: WO 95/34398

(56) References cited:
- WO-A-94/15740
- DE-A- 2 316 762
- DE-B- 2 600 225
- SE-B- 347 450
- SE-B- 468 930
- US-A- 5 302 059
- DERWENT'S ABSTRACT, No. J9464B/42, Week 7942; & SU,A,643 252 (RADOSHCHEKIN G A), 28 January 1979.

## Description

The present invention relates to a drilling tool for chip-breaking machining of metallic materials according to claim 1 and as known for example from DE-A-2316762. Such a tool primarily is intended for so called ejector drilling. However, it may also advantageously be used for so called BTA-drilling.

It is known to use cutting inserts of cemented carbide for drills, which inserts are fastened by mechanical fastening arrangements, said inserts being provided with one or more recesses in the chip surface for chip-breaking purposes. In DE-A-2316762 a drill body primarily for ejector drilling is described. It consists of a substantially cylindrical, tube shaped part, with a substantially cylindrical cavity extending from the one end to close to the operative drill head at the other end. The drill head is provided with one or more cemented carbide cutting inserts, which are soldered or brazed in insert pockets provided for this purpose. The drill body consists of one single piece wherein the drill head includes two branch channels leading down from the cutting insert area into the central cylindrical cavity. The limited size and shape of the branch channels can lead to problems with chip jamming. Such drills are also known from US-A-4 215 157. However, it has turned out that one has not been able to attain the optimal, desirous forming of the chips. Thus, it has turned out to be impossible to attain the desired short comma-formed chips, at the same time, as it has been impossible to reduce the effect consumption when running the drill in the desired way. Further, sometimes the chip canals have turned out to be too narrow for the created chips, which has resulted in chip stoppage and jamming.

Further, in EP-A-491 670 a drilling tool is described comprising a drill body on which two or more cutting inserts are mounted. The inserts are substantially formed as parallel-trapezoids and are axially mounted, i.e., the abutment surfaces of the cutting inserts extend axially, the inserts suitably being fixed by brazing. However, after a certain time of wear, also this drill body has sometimes caused chip jamming in the area where the two chip canals and the central hole meet. Moreover, the drill body consists of two parts which are joined by welding, namely the drill head as such or the drill crown, and the cylindrical, partly threaded part. This weld joint in combination with the fact that the drill crown has been cast, has with a certain frequency resulted in an imperfect roundness of the final product. This has in turn implied that some customers have required a finishing grinding in order to attain a perfect roundness and rotation symmetry around the central axis, which unnecessarily increases the production cost of the drill. A further drawback of this weld joint has turned out to be that chips occasionally get stuck in the weld joint, since in practice a weld joint is never fully through but leaves a certain gap on the interior side. It is often enough that one single chip gets wedged to make the following chips pile up and cause chip jamming and in worst case a tool breakdown.

Thus, a primary object of the present invention is to provide a drill body, particularly a drill body for ejector drilling, that practically eliminates any risk for chip jamming.

A further object of the present invention is to eliminate any unevenness on the inside, in which a chip could get jammed.

Another object of the present invention is to provide a drill body with practically perfect roundness.

It has been succeeded to attain these and further objects by forming the drill body with the features as defined in the characterizing clause of claim 1.

For illustrative but non-limiting purposes, a preferred embodiment of the invention will now be further described with reference to the appended drawings. These are herewith presented:
Figure 1 shows a mounted drilling tool according to the invention in a perspective view obliquely from above.
Figure 2 shows a drill cutting insert according to the invention in a perspective view obliquely from above.
Figure 3 shows the same drilling tool as in figure 1 in a side view, however unmounted.
Figure 4 shows the drilling tool straight from above.

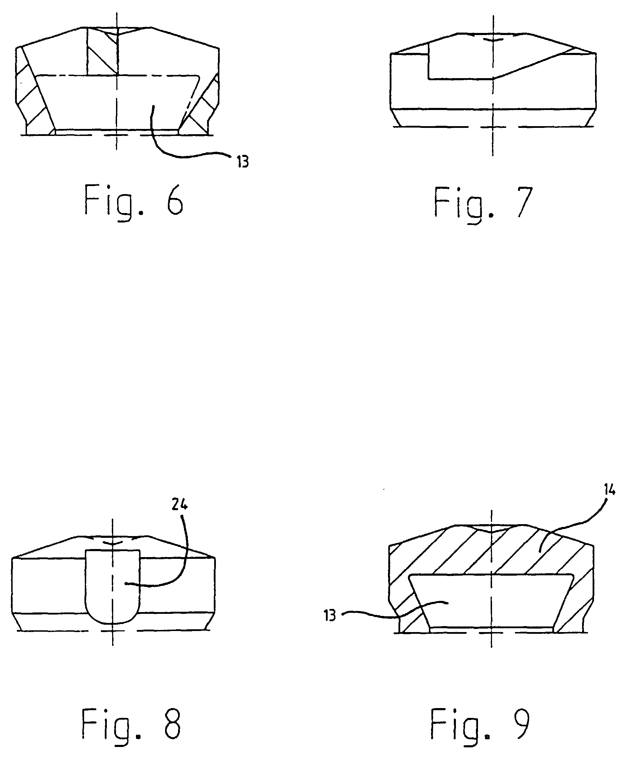

Figure 5 shows the same view as figure 4, but with the different views and sections in the figures 5 to 8 defined.
Figure 6 shows the cross-section VI-VI according to figure 5, of the upper part of the tool.
Figure 7 shows the view VII according to figure 5 of the upper part of the tool.
Figure 8 shows the view VIII according to figure 5 of the upper part of the tool.
Figure 9 shows the cross-section IX-IX according to figure 5 of the upper part of the tool.

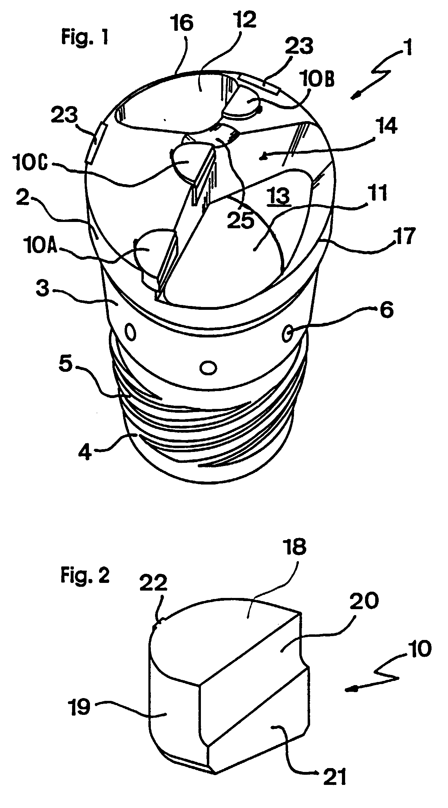

In figure 1 a drilling tool of ejector type is generally designated by reference numeral 1. Advantageously, it may also be generally used for so called BTA-drilling. The tool comprises a drilling crown or head 2, an intermediate part 3 and a shaft 4. The shaft 4 is provided with an outer thread 5, which is intended to, in a way known per se, be fixed by threading it upon a fastening outer tube (not shown). An inner tube (not shown) that is concentrical with said outer tube is inserted in a way known per se into the inner, substantially cylindrical cavity of the drill, past the cooling medium holes 6, whereby formed chips follow the cutting medium through said inner tube.

According to previously known technique (for instance EP-A-491 670), the drill head 2 per se is cast while the shaft 4 is turned, whereafter these two parts are joined by welding. A welding always causes deformations due to heat expansion and an uneven retraction during the following cooling. These inconveniences are further accentuated for thin parts of a workpiece. Further the head may become somewhat unround, in spite of the precision casting. These inconveniences are fully overcome by the present invention by producing the whole drill body in one single piece by turning, thereby avoiding all welding, which in turn brings the advantage that any risk for remaining weld joint gaps on the inside are avoided.

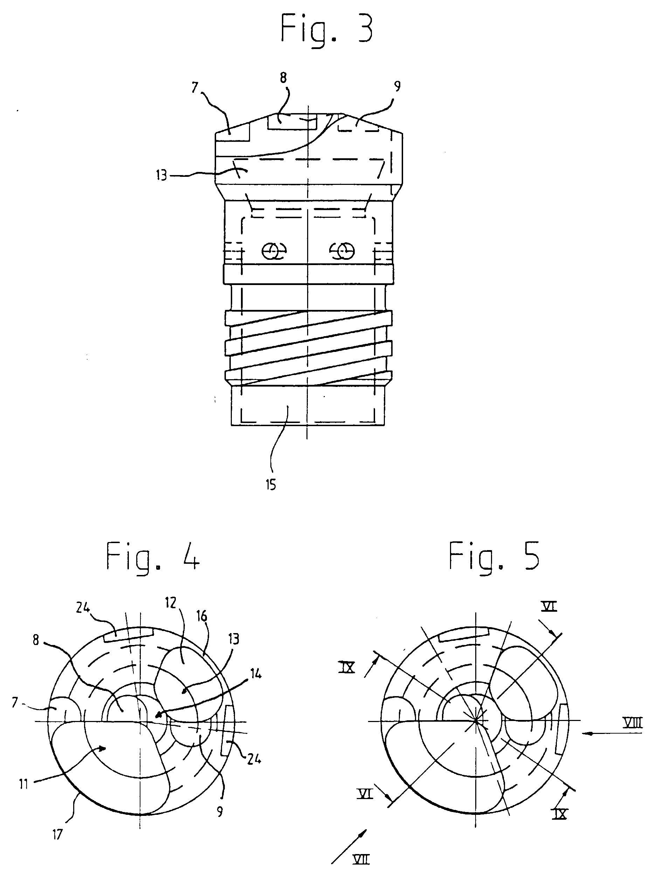

As may be seen in figures 3 and 4, the top side of the drill head is provided with three cutting insert seats or pockets 7, 8 and 9 each intended to accommodate a drill cutting insert 10. Advantageously, the three cutting inserts are equal, the only difference being that the central cutting insert is reversed in comparison to the peripheral and intermediate cutting inserts. The number of cutting inserts in an ejector drill may be chosen between one and five. However, the disadvantage with one single cutting insert is that the cutting forces that the support pads have to endure become large since the drill becomes unbalanced. It has been found that the number of three is a good compromise between complicity, life and out-balancing. The ejector drill is usually produced as a one-way drill and the cemented carbide inserts according to figure 2 are therefore soldered or brazed in the cutting pockets. Since it is of one-way type, the drill should be worn as long as possible without the product quality and the cassation risk becoming disturbing. The periphery insert 10A determines the diameter of the drilled hole, which is usually between 20 and 65 mm. Radially inwardly the cutting edge of this insert is inclined upwardly. The adjacent central cutting insert 10C in the cutting pocket 8 overlaps the center axis of the drill, since no remaining core is desired. Contrary to the peripheral insert, axially downwardly its cutting edge is inclined radially inwardly, since otherwise the trailing cutting insert would be submitted to so large stress that it would very soon break. In agreement with the inclination of the central cutting edge, the head tip is provided with a conical recess 25. On the opposed side of the central axis, the intermediate cutting insert 10B is in the insert pocket 9. Like the peripheral insert 10A, axially upwardly its cutting edge is inclined in direction radially inwardly. At rotation, the revolution path of the cutting edge of the intermediate insert overlaps somewhat with both the cutting edges of the peripheral and the central cutting inserts, in order to obtain a continuous cutting line from the central axis to the periphery. According to the present invention, the inserts may be either tangentially positioned, as illustrated in the appended figures, or axially positioned, as for instance disclosed in EP-A-491 670. However, they are preferably arranged in accordance with the appended figures.

Two chip canals, ducts or flutes end in the top side of the drill: one common, larger chip canals 11 for the peripheral and the central inserts, and one somewhat smaller chip flute 12 for the intermediate cutting insert. In conformity with a preferred embodiment of the present invention, the opposed, lower ends of these chip canals end in a turned-out inner chip space 13, which has a frustoconical shape, with the bottom surface turned upwards in direction towards the top side of the drill. By this chip space 13, the central and intermediate cutting inserts will be on a bridge-shaped device 14, that extends transversely over the space 13 and connects to two, substantially diametrically opposed parts of the drill's top side. Since the whole drill 1 is preferably made in one single piece, this space 13 is turned by a turning tool being introduced through the opening or substantially cylindrical cavity 15 in the rear end side of the drill. This space 13 results in several advantages, of which may be mentioned increased chip space with minimized risk for chip jamming, and a lighter construction. It would be impossible to cast. However, thanks to the fact that the whole drill body is cast in one single turned piece, cavities may be formed which increase inwardly. The chip canals 11 and 12 have been milled out from above, from the drill's topside. In order to optimize the available chip space in the chip flutes, the milling tool has been angled relative to the central axis of the drill, adjacent to the periphery of the drill, so that outwardly angled, bevelled surfaces have been obtained, which adjoin either to the immediate proximity of the outer envelope surface of the drill via a small land portion 16, or which directly form a break line 17 with said envelope surface.

In view of the above description, the combination effect should be evident of an integral drilling tool together with the turned-out chip space 13; namely that both cooperate to achieve maximal and fully unhindered chip flow. If for instance the chip space 13 were formed in a welded drill, the weld joint would be located on the conical envelope surface of said space, where the weld joint gap earlier or later would cause a wedging of a chip. On the other hand, if the boring 15 would continue uniformly without any chip space 13, the available chip flow space would diminish and thereby the risk for chip jamming would increase.

The rotation-symmetrical outer surface of the drill is suitably made by turning while the other external surface portions are formed by milling. As best seen in figures 3 and 4, the insert pockets or seats 7, 8 and 9 are made in the simplest possible way, namely by one single short, straight end milling operation per insert seat, with one and the same end mill. Thereby, the rear abutment surface of the insert pocket of course gets a rounded, semi circle-formed shape corresponding to the cutting diameter of the end mill. The inner cavity 15 is bored, whereafter as mentioned above, the chip space 13 is turned out. It may be pointed out that also the part that is occupied by the chip space 13 before then consists of a continuous portion of the boring 15.

As mentioned, figure 2 reproduces a cutting insert 10 according to the present invention. Inter alia, it comprises a relief surface 18 and a rounded edge side 19. The chip surface comprises an extended chip breaker 20 and below that a substantially plane chip surface portion 21. At the rear, on the rounded edge side of the cutting insert, it may be provided with a distance knob 22 which sets aside any interferences when positioning the insert in the insert pocket due to unevennesses that may arise when the inserts are pressed. Moreover, the distance knob 22 minimizes the risk for any positioning discrepancies caused by the varying thickness of the solder layer, by the fact that the contact between the two opposed semi circle-shaped surfaces becomes minimal.

The rounded back of the cutting insert gives a considerably reduced risk for the formation of cracks, since it permits a favourable stress picture without any sham corners which involve stess concentrations. Further, since the length of the insert is large in comparison to the insert width, a larger support is obtained for taking up cutting forces. Moreover, the insert is very favourable at the pressing per se and does not cause any compacting problems whatsoever.

In order to absorb radial cutting forces, the drill according to the invention is equipped with support pads 23, which are soldered or brazed in the support pad pockets 24. Also these support pad pockets are suitably milled out by one sole straight milling operation with an end mill, in the same way as the insert pockets 7, 8 and 9. The support pad may suitably have a matching shape, i.e., an elongated body with a rounded end. Furthermore, the outer side of the support pad is suitably given a rounded form, with the shape of a cylinder surface segment, in order to substantially conform to the substantially cylindrical envelope surface of the drill. Both at the mounting of the inserts and of the support pads, the rounded rear abutment surface functions for guidance in the initial stage of the mourning, i.e., it permits a certain dislocation laterally, which is a necessity for automated mounting.

## Claims

1. Drill body primarily intended for ejector drilling and substantially consisting of a substantially cylindrical, tube-shaped part, in whose one end ends an inner, substantially cylindrical cavity (15) and in whose other end is arranged an operative drill head (2) provided with one or more cemented carbide culling inserts (10), which are soldered or brazed in insert seats or pockets (7, 8, 9) provided for this purpose, the drill body consisting of one single piece, **characterized** in that the drill head (2) includes a chip space (13) with a substantially frustoconical shape, whose bottom surface is directed towards the operative end of the drill head and connects to one or more chip canals (11, 12), the other end of said chip space (13) connecting to the substantially cylindrical cavity (15).

2. Drill body according to claim 1, **characterized** in that the insert seats or pockets (7, 8, 9) and the inserts (10) are tangentially placed in the operative end of the drill head, and in that the rear abutment surfaces of the insert seats and the corresponding rear abutment surfaces of the cutting inserts are rounded.

3. Drill body according to claim 1 or 2, **characterized** in that it comprises three cutting inserts, namely a peripheral insert (10A), an intermediate insert (10B) and a central insert (10C).

4. Drill body according to claim 3, **characterized** in that two chip canals (11, 12) end in its top side, the one chip canal (11) leading away the chips originating from the peripheral insert (10A) and the central insert (10C) while the other chip canal (12) leads away the chips originating from the intermediate insert (10B).

5. Drill body according to any of the preceding claims, **characterized** in that the drill body comprises one or several support pads (23), which are soldered or brazed in corresponding recesses (24) on the outer envelope surface of the drill body, both support pads and corresponding recesses comprising two substantially parallel long sides and a substantially semi circle-formed end side.

## Patentansprüche

1. Bohrkörper, der hauptsächlich zum Ejektorbohren bestimmt ist und im wesentlichen aus einem im wesentlichen zylindrischen, rohrförmigen Teil besteht, in dessen einem Ende ein innerer, im wesentlichen zylindrischer Hohlraum (15) endet und in dessen anderem Ende ein Betriebsbohrkopf (2) angeordnet ist, der mit einem oder mehreren Schneideinsätzen (10) aus Sinterkarbid versehen ist, welche in zu diesem Zweck vorgesehenen Einsatzsitzen oder -taschen (7, 8, 9) gelötet oder hartgelötet sind, wobei der Bohrkörper aus einem einzigen Stück besteht, dadurch gekennzeichnet, daß der Bohrkopf (2) einen Spanraum (13) mit einer im wesentlichen kegelstumpfförmigen Gestalt aufweist, dessen Bodenoberfläche gegen das Betriebsende des Bohrkopfes ausgerichtet ist und sich mit einem oder mehreren Spankanälen (11, 12) verbindet, wobei sich das andere Ende des Spanraumes (13) mit dem im wesentlichen zylindrischen Hohlraum (15) verbindet.

2. Bohrkörper nach Anspruch 1, dadurch gekennzeichnet, daß die Einsatzsitze oder -taschen (7, 8, 9) und die Einsätze (10) tangential in dem Betriebsende des Bohrkopfes angeordnet sind und daß die rückwärtigen Anschlagoberflächen der Einsatzsitze und die entsprechenden rückwärtigen Anschlagoberflächen der Schneideinsätze gerundet sind.

3. Bohrkörper nach Anspruch 1 oder 2, dadurch gekennzeichnet, daß er drei Schneideinsätze aufweist, nämlich einen Umfangseinsatz (10A), einen Zwischeneinsatz (10B) und einen Mitteleinsatz (10C).

4. Bohrkörper nach Anspruch 3, dadurch gekennzeichnet, daß zwei Spankanäle (11, 12) in seiner oberen Seite enden, wobei der eine Spankanal (11) die von dem Umfangseinsatz (10A) und dem Mitteleinsatz (10C) stammenden Späne wegleitet, während der andere Spankanal (12) die von dem Zwischeneinsatz (10B) stammenden Späne wegleitet.

5. Bohrkörper nach einem der vorhergehenden Ansprüche, dadurch gekennzeichnet, daß der Bohrkörper eine oder mehrere Stützunterlagen (23) aufweist, die in entsprechenden Ausnehmungen (24) auf der äußeren Umhüllungsoberfläche des Bohrkörpers gelötet oder hartgelötet sind, wobei sowohl die Stützunterlagen als auch die entsprechenden Ausnehmungen zwei im wesentlichen parallele Längsseiten und eine im wesentlichen halbkreisförmige Endseite aufweisen.

## Revendications

1. Corps de foret principalement destiné à un forage par éjecteur et constitué essentiellement d'une pièce en forme de tube pratiquement cylindrique, dans une extrémité de laquelle se termine une cavité interne sensiblement cylindrique (15) et dans l'autre extrémité de laquelle est agencée une tête de foret active (2) munie d'une ou plusieurs plaquettes de coupe en carbure cémenté (10), lesquelles sont soudées ou brasées dans des sièges ou poches pour plaquette (7, 8, 9) prévues dans ce but, le corps de foret étant constitué d'une seule pièce, caractérisé en ce que la tête de foret (2) comprend un espace pour copeaux (13) présentant une forme sensiblement tronconique, dont la surface de fond est orientée vers l'extrémité active de la tête de foret et est reliée à un ou plusieurs canaux pour copeaux (11, 12), l'autre extrémité dudit espace pour copeaux (13) étant reliée à la cavité sensiblement cylindrique (15).

2. Corps de foret selon la revendication 1, caractérisé en ce que les sièges ou poches pour plaquette (7, 8, 9) et les plaquettes (10) sont placées de façon tangentielle dans l'extrémité active de la tête de foret, et en ce que les surfaces de butée arrière des sièges pour plaquette et les surfaces de butée arrière correspondantes des plaquettes de coupe sont arrondies.

3. Corps de foret selon la revendication 1 ou 2, caractérisé en ce qu'il comprend trois plaquettes de coupe, à savoir une plaquette périphérique (10A), une plaquette intermédiaire (10B) et une plaquette centrale (10C).

4. Corps de foret selon la revendication 3, caractérisé en ce que deux canaux pour copeaux (11, 12) se terminent dans sa face supérieure, le premier canal pour copeaux (11) acheminant les copeaux provenant de la plaquette périphérique (10A) et de la plaquette centrale (10C) tandis que l'autre canal pour copeaux (12) achemine les copeaux provenant de la plaquette intermédiaire (10B).

5. Corps de foret selon l'une quelconque des revendications précédentes, caractérisé en ce que le corps de foret comprend un ou plusieurs patins de support (23), qui sont soudés ou brasés dans des évidements correspondants (24) sur la surface d'enveloppe externe du corps de foret, à la fois les patins de support et les évidements correspondants comprenant deux faces longues sensiblement parallèles et une face d'extrémité sensiblement en forme de demi-cercle.
